# EUROPÄISCHE PATENTANMELDUNG

(11) **EP 0 594 160 A1**
(43) Veröffentlichungstag der Anmeldung: **27.04.1994**
(21) Anmeldenummer: 93117004.7
(22) Anmeldetag: 20.10.1993
(51) Int. Cl.: A01G 23/04, B62D 53/00, E02F 9/08

(54) **Maschine insbesondere zum Einsatz in Baumschulen, Gärten und dergleichen**

(30) Priorität: 22.10.1992 DE 4235623; 21.01.1993 DE 4301513; 21.08.1993 DE 9312544 U
(71) Anmelder: Heitzler, Karl, D-79224 Umkirch (DE)
(72) Erfinder: Heitzler, Karl, D-79224 Umkirch (DE)
(74) Vertreter: Patent- und Rechtsanwaltssozietät, Schmitt, Maucher & Börjes

(57) **Zusammenfassung**

Eine Maschine dient insbesondere zum Einsatz in Baumschulen, Gärten oder dergleichen. Sie weist als Schleppfahrzeug einen Schmalspurschlepper (2) sowie einen daran ankuppelbaren Anhänger (3) auf, auf dem sich ein Ausleger-Gelenkarm mit einem daran anbringbaren Arbeitsgerät befindet.
Der Anhänger (3) ist einerseits so mit dem Schmalspurschlepper kuppelbar, daß ein Fahrbetrieb möglich ist, andererseits kann die Verbindung so umgestellt werden, daß eine im wesentlichen starre Verbindung zwischen Anhänger und Schmalspurschlepper in einer Arbeitsstellung vorhanden ist. Schlepper und Anhänger bilden dabei eine Einheit und der Schlepper kann so als Gegengewicht dienen. Der Anhänger (3) ist weiterhin in seiner Spurbreite von Schmalspur auf Normalspur mit breiterer Spurbreite umstellbar, so daß auch ein Straßen-Fahrbetrieb möglich ist. Weiterhin weist der Anhänger ein Abstützung (32) mit seitlich ausfahrbaren Stützarmen (33) und daran befindlichen Stützstempeln (34) auf, so daß durch diese Abstützung auch in Schmalspurstellung des Anhängers (3) eine gute Seitenabstützung gegeben ist.

## Beschreibung

Die Erfindung bezieht sich auf eine Maschine insbesondere zum Einsatz in Baumschulen, Gärten oder dergleichen mit einem Schleppfahrzeug und einem Anhänger, auf dem sich ein Ausleger-Gelenkarm mit einem an diesem anbringbaren Arbeitsgerät befindet.

Mit solchen Maschinen sollen die im Bereich vom Baumschulen, Gärten und dergleichen anfallenden Arbeiten vereinfacht werden. Es sind dazu bereits eine Vielzahl von Anbaugeräten bekannt, die an die sogenannte Dreipunktaufhängung eines Schleppers angehängt werden können. In Baumschulen und dergleichen werden meist Pflanzreihen angelegt, in die nur Schmalspurfahrzeuge passen. Dementsprechend können diese schmalen Fahrzeuge auch nur vergleichsweise geringe Lasten bzw. Anbaugeräte transportieren.
Gerade bei Erdarbeiten - Baggern, Ballenschneiden und dergleichen - wo erhebliche Gewichte angehoben werden müssen, stoßen solche Schmalspur-Maschinen schnell an ihre Leistungsgrenzen. Problematisch ist auch, daß solche Schmalspurfahrzeuge mit Anbaugerät keine hohe Kippsicherheit während des Fahrbetriebes aufweisen und daher nur bedingt straßentauglich sind.

Aufgabe der vorliegenden Erfindung ist es, eine vergleichsweise leistungsstarke Maschine der eingangs erwähnten Art zu schaffen, die auch in den schmalen Pflanzreihen einer Baumschule einsetzbar ist und mit der auch in einer oder über zwei Reihen hinweg Arbeiten, zum Beispiel Baggerarbeiten, Ballen-Unterschneide- und Aushebearbeiten und dergleichen durchführbar sind.
Beim Ballenschneiden soll der unterschnittene Ballen auch verladen werden können und dabei seitlich versetzt werden. Ein Transportfahrzeug befindet sich in der Regel immer seitlich neben dem Arbeitsfahrzeug in einer Parallelreihe und der Ballen oder aber ausgehobene Erde müssen dann entsprechend nach dem Unterschneiden oder Ausheben in diese Parallelreihe auf das Fahrzeug aufgeladen werden können. Die Maschine soll dementsprechend trotz geringer Spurweite eine gute Standfestigkeit beim Durchführen der Arbeiten aufweisen.

Zur Lösung dieser Aufgabe wird erfindungsgemäß insbesondere vorgeschlagen, daß das Schleppfahrzeug ein Schmalspurschlepper oder dergleichen ist, daß der Anhänger ein Schmalspur-Anhänger ist und in Arbeitsstellung zumindest in der beim Arbeiten auftretenden Belastungsrichtung starr und im wesentlichen biegesteif mit dem Schleppfahrzeug kuppelbar ist und daß sich am Anhänger eine Abstützung mit seitlich ausfahrbaren Stützarmen befindet.
In Arbeitsstellung kann so eine starre Einheit, bestehend aus Anhänger und Schleppfahrzeug geschaffen werden, die insgesamt ein wesentlich höheres Gegengewicht bilden als Anhänger und Schleppfahrzeug jeweils für sich getrennt.
Die seitlich ausfahrbaren Stützarme können zwischen den Pflanzen benachbarter Pflanzreihen hindurch ausgefahren werden und ergeben so eine besonders gute Abstützung, da man hier nicht auf die Breite der Pflanzreihe bezüglich der Stützweite angewiesen ist.

Zweckmäßigerweise ist dabei die mit dem Anhänger verbundene Abstützung zwischen dem Schleppfahrzeug und dem Anhänger vorgesehen. Da beidseitig der Abstützebene quer zur Längserstreckung der Maschine einerseits sich der Anhänger und andererseits der Schmalspurschlepper als Gegengewichte befinden, ergibt sich so eine besonders günstige Abstützung.
Zweckmäßigerweise ist der Anhänger ein Einachsanhänger. Dieser ist gut rangierbar und erfüllt die Anforderung, den Ausleger-Gelenkarm mit daran angebrachtem Arbeitsgerät zu tragen und somit den Schmalspurschlepper davon zu entlasten.
An das Ende des Ausleger-Gelenkarmes kann bevorzugt ein Ballenschneider mit Unterschneide-Aushebemesser sowie Vibrations- und Schwenkgetriebe angebracht sein. Gegebenenfalls kann aber auch ein Baggerlöffel, ein Greifer, ein Kran, ein Hubsteiger oder dergleichen angebracht werden.
Insbesondere bei einem Ballenschneider als Arbeitsgerät ist nach einer Weiterbildung der Erfindung vorgesehen, daß zwischen dem Ausleger-Gelenkarm und dem daran angebrachten Ballenschneider eine Doppelgelenk-Drehverbindung vorgesehen ist zur Ausführung von Drehbewegungen und Kippbewegungen des Arbeitsgerätes.
Von einem Standort der Maschine aus können so unterschiedliche Stellen bei zu unterschneidenden Pflanzen erreicht werden und es besteht auch die Möglichkeit, unterschnittene und ausgehobene Ballen durch eine seitliche Kippbewegung auf ein Ballentuch oder dergleichen abzulegen, ohne daß dabei der Ballen beschädigt wird oder auseinanderfällt.

Bei dem Anhänger bilden die Räder mit Achse nur ein Transportfahrgestell zum Entlasten des Schleppfahrzeuges und für den Transport an den jeweiligen Einsatzort. Es ist hier also keine besonders hohe Anforderung an die Kippsicherheit gegeben, da sich während des Transportes das Arbeitsgerät in einer bodennahen bzw. schwerpunktnahen Transportlage befinden kann. Trotzdem ist insbesondere durch den Ausleger-Gelenkarm eine Schwerpunktverlagerung nach oben vorhanden, durch die eine nur reduzierte Kippsicherheit vorhanden ist. Um den Anhänger auch in Verbindung mit einem Schleppfahrzeug straßentauglich zu machen und eine dementsprechend höhere, geforderte Kippsicherheit zu erreichen, wird erfindungsgemäß vorgeschlagen, daß die Spurbreite des Anhängers verstellbar, insbesondere von der Schmalspur-Ausgangslage verbreiterbar ist und daß dazu vorzugsweise teleskopartige, hydraulisch betätigbare Achsteile vorgesehen sind. Der Anhänger kann so außerhalb der Pflanzreihen bzw. außerhalb von beengten Verhältnissen durch Spurverbreiterung auf Straßenbetrieb umgestellt werden.

Um eine starre Verbindung des Anhängers mit dem Schmalspurschlepper in Arbeitsstellung zu erreichen ist nach einer Ausführungsform der Erfindung vorgesehen, daß als Verbindung zwischen Schlepper und Anhänger eine Deichsel und zusätzlich höhenversetzt zu der Deichsel wenigstens eine Abstützstrebe vorgesehen ist.
Bei eingesetzter Stützstrebe ist zwischen dem Anhänger und dem Schlepper eine im wesentlichen bezüglich einer etwa horizontalen Achse starre Verbindung geschaffen, so daß Schlepper und Anhänger eine Einheit bilden und insgesamt als Gegengewicht bei Arbeiten mit dem Ausleger-Gelenkarm dienen. Durch die Einbeziehung des Schleppers als Gegengewicht können dementsprechend auch wesentlich höhere Lasten angehoben oder Kräfte bei Bodenarbeiten eingebracht werden.

Eine weitere Verbesserung der Kippsicherheit ergibt sich, wenn nach einer Weiterbildung der Erfindung an den äußeren Enden der Stützarme der Abstützung Gewichte vorgesehen sind, und wenn dazu vorzugsweise an den äußeren Stützarmenden befindliche Stützstempel und/oder die äußeren Glieder der vorzugsweise hydraulisch teleskopierbaren Stützarme zumindest bereichsweise aus Vollmaterial bestehen oder mit Gewichten gefüllt oder teilgefüllt sind. Dadurch sind zusätzliche Gegengewichte vorhanden, die die Standfestigkeit weiter verbessern. Unter Umständen könnten man bei Verwendung dieser Ausleger-Gewichte auch mit geringerer Stützbreite der Abstützung auskommen.

Zusätzliche Ausgestaltungen der Erfindung sind in den weiteren Unteransprüchen aufgeführt. Nachstehend ist die Erfindung mit Ihren wesentlichen Einzelheiten anhand der Zeichnungen noch näher erläutert.

Es zeigt:
- Fig.1: eine Seitenansicht einer Maschine bestehend aus einem Schmalspurschlepper und einem Anhänger mit Ausleger-Gelenkarm und daran befindlichem Ballenschneider,
- Fig. 2: eine Rückseitenansicht des Anhängers mit verstellbarer Spurbreite und verstellbarer Abstützung,
- Fig. 3: eine perspektivische Ansicht einer Doppelgelenk-Drehverbindung zwischen Ausleger-Gelenkarm und Arbeitsgerät,
- Fig. 4: das Ende des Ausleger-Gelenkarmes mit daran angebrachtem Ballenschneider in Seitenansicht sowie
- Fig. 5: die Anordnung gemäß Fig. 4 um 90° gedreht,
- Fig. 6: eine etwas schematisierte Aufsicht eines Schleppfahrzeuges mit Anhänger und einer Deichselverbindung,
- Fig. 7: eine Rückseitenansicht eines gegenüber Fig. 2 etwas abgewandelt ausgebildeten Anhängers,
- Fig. 8: eine etwa mit Fig. 1 vergleichbare Darstellung, hier jedoch mit einem gemäß Fig. 7 abgewandelt ausgeführten Anhänger,
- Fig. 9: eine Aufsicht im Deichselbereich zwischen Schleppfahrzeug und Anhänger und gegenüber Fig. 6 abgeänderter Ausführung,
- Fig. 10: eine Seitenansicht einer am Anhänger angeordneten Schlittenkufe,
- Fig. 11: eine Rückseitenansicht des Anhängers mit am Rahmen angeordneten Schlittenkufen und
- Fig. 12.: eine Seite eines Achsbereiches des Anhängers mit Spurverstelleinrichtung.

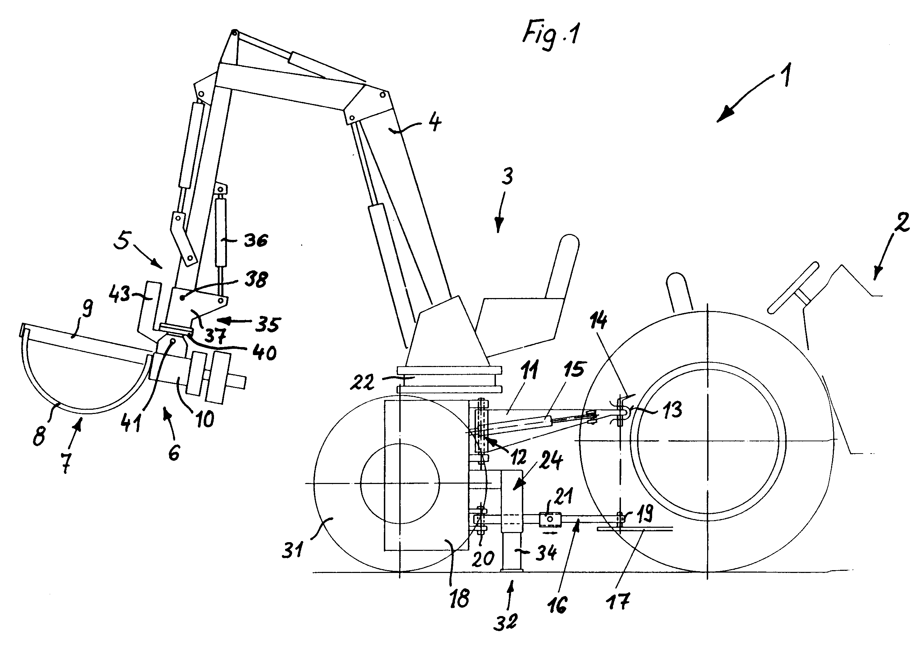

Fig. 1 zeigt eine Maschine 1 bestehend aus einem Schleppfahrzeug 2 sowie einem damit verbundenen Anhänger 3, der einen Aufbau mit einem Ausleger-Gelenkarm und an dessen freien Ende 5 angebrachtem Arbeitsgerät 6 aufweist. In den dargestellten Ausführungsbeispielen ist das Arbeitsgerät 6 ein Ballenschneider 7 mit einem bügelförmigen Unterschneidemesser 8, das an einem Messerbügel-Halter 9 schwenkbar gelagert ist. Das Unterschneidemesser 8 ist mit einem Vibrations- und Schwenkgetriebe 10 verbunden.
Mit Hilfe des Ballenschneiders können Wurzelballen unterschnitten und ausgehoben werden.

Bevorzugt wird die Maschine 1 in Baumschulen eingesetzt, wo Pflanzreihen vorhanden sind, in die Maschine einfährt, um dann Pflanzen zu unterschneiden beziehungsweise auch auszuheben. Die Pflanzreihen haben oft nur einen Seitenabstand von 1,4 m, so daß auch die Maschine 1 entsprechend schmal gebaut sein muß.

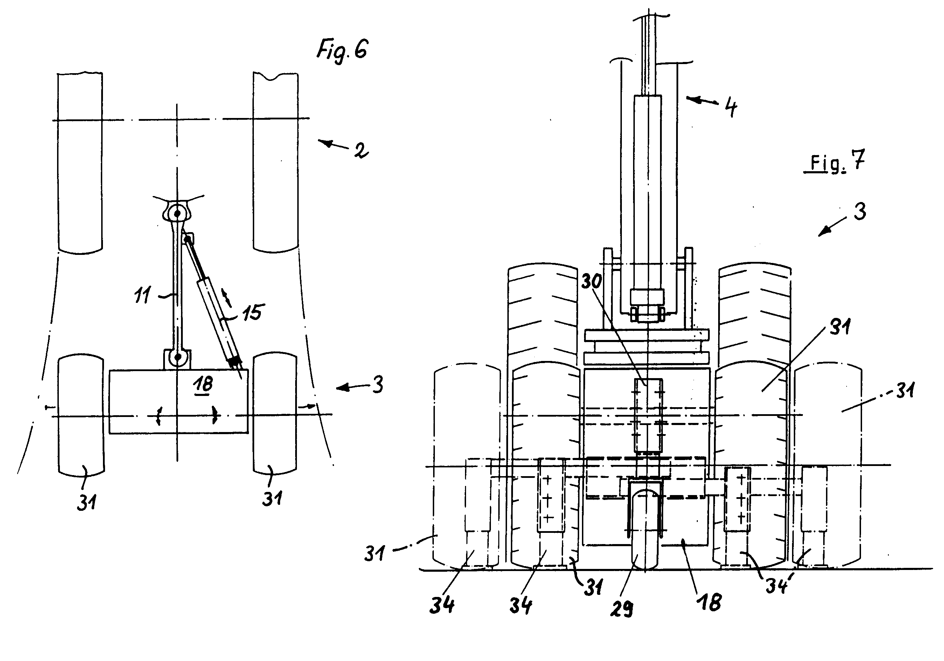

Als Schleppfahrzeug 2 wird deshalb ein Schmalspurschlepper eingesetzt. Der Anhänger 3, der praktisch eine Lafette bildet, weist ebenfalls eine entsprechend schmale Spurbreite auf.
Zum Verbinden des Anhängers 3 mit dem Schmalspurschlepper ist eine Deichsel 11 vorgesehen, die an einem Gelenk 12 des Anhängers seitlich verschwenkbar angebracht ist. Das andere Ende der Deichsel 11 ist mit einem Kupplungsauge versehen, durch das ein zum Zugmaul 13 des Schmalspurschleppers gehörender Sicherungsbolzen 14 einsteckbar ist. Das als Schwenkgelenk ausgebildete Gelenk 12 ist so ausgebildet, daß es die auftretenden Kippkräfte insbesondere auch beim Fahrbetrieb übertragen kann.
Wie in Fig. 6 erkennbar, ist seitlich an der Deichsel ein Hydraulikzylinder 15 vorgesehen, der mit seinem einen Ende am vorderen Bereich der Deichsel und mit seinem anderen Ende seitlich versetzt zum Gelenk 12 am Anhänger-Rahmen angreift. Mit Hilfe dieses Hydraulikzylinders 15 kann insbesondere der Nachlauf des Anhängers zusätzlich gesteuert werden, so daß das Einfahren bzw. Rangieren in schmalen Pflanzreihen erleichtert ist. Für die normale Straßenfahrt wird der Hydraulikzylinder 15 arretiert, so daß ein Verschwenken der Deichsel 11 um das Gelenk 12 dann nicht mehr möglich ist.

In Arbeitsstellung kann der Anhänger 3 im wesentlichen starr mit dem Schleppfahrzeug verbunden werden. Dazu ist außer der Verbindung mit Hilfe der Deichsel 11 eine mit Abstand zu dieser unterhalb angeordnete Abstützstrebe 16 vorgesehen. Die Abstützstrebe 16 kann als starre Einhängestrebe ausgebildet sein und ist mit ihren Enden einerseits über ein Gelenk 19 mit der Ankerschiene 17 des Schmalspurschleppers 2 und mit ihrem anderen Ende über ein Gelenk 20 mit dem Rahmen 18 des Anhängers 3 verbunden.
Durch die aus der Deichsel 11 und der Abstützschiene 16 gebildeten Doppellenker-Verbindung zwischen Anhänger und Schleppfahrzeug kann die beim Anheben einer Last, beispielsweise eines unterschnittenen Pflanzenballens mit Hilfe des Ballenschneiders 7 auftretende Kraft auf das ein zusätzliches Gegengewicht bildende Schleppfahrzeug 2 übertragen werden. Somit ist ein ausreichendes Gegengewicht auch zum Anheben vergleichsweise schwerer Lasten vorhanden.
Praktische Versuche haben gezeigt, daß so Lasten von beispielsweise 700 kg bei einer Auslegerweite von bis zu 4 m angehoben werden können.
Die Abstützstrebe 16 ist bevorzugt teleskopartig ausgebildet und weist eine Feststelleinrichtung 21 auf. Mit Hilfe der Feststelleinrichtung 21 ist eine Verriegelung der Abstützstrebe 16 möglich, so daß sie dann in ihrer Länge nicht mehr veränderbar ist. Für den normalen Fahrbetrieb ist die Feststelleinrichtung 21 jedoch lösbar.

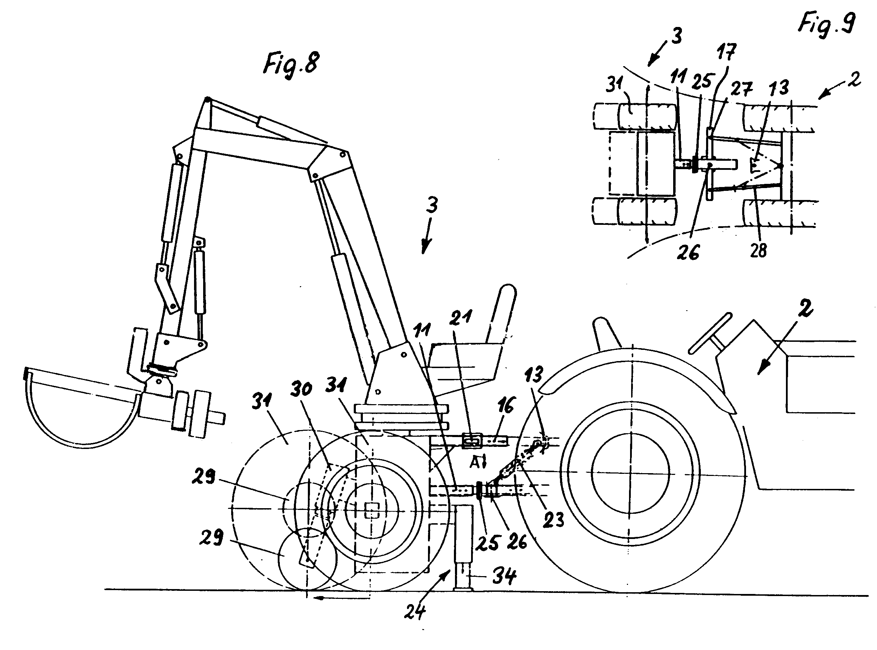

Eine andere Ausführungsform einer Verbindung zwischen Schleppfahrzeug 2 und Anhänger 3 zeigen die Figuren 8 und 9. Die Deichsel 11 ist hier an der Ackerschiene 17 (vgl. Fig. 9) des Schleppfahrzeuges angehängt. Die Deichsel kann auch direkt am Schleppfahrzeug 2 angehängt werden. Bei Anhängung an die Ackerschiene läuft der Anhänger spurtreu hinter dem Schlepper her.
Die als Oberlenker ausgebildete Abstützstrebe 16 greift einerseits am Rahmen 18 unmittelbar unterhalb des Drehkranzes 22 des Ausleger-Gelenkarmes an und ist andererseits an der Anhängekupplung mit dem Zugmaul 13 des Schleppfahrzeuges verbunden. Durch das Versteifungselement 23, welches die Ackerschiene 17 mit dem Oberlenker bzw. der Abstützstrebe 16 verbindet, wird die Ackerschiene 17 zu einem feststehendem Rahmen des Schleppfahrzeuges 2 ausgebildet. Das Versteifungselement 23 kann auch direkt an der Anhängekupplung 13 des Schleppfahrzeuges angeordnet sein. Durch die Feststelleinrichtung 21 der Abstützstrebe 16 sowie die noch zu beschreibende Boden-Abstützung 24 wird beim Arbeiten mit der Maschine eine optimale Standfestigkeit erzielt.

In Fig. 9 ist in der Draufsicht noch gut erkennbar, daß die Deichsel 11 über ein Schwenkgelenk 25 und einem horizontalen Drehgelenk 26 mit der Ackerschiene 17 verbunden ist. Die Ackerschiene 17 ist über die Gelenke 27 und die Unterlenker 28 sowie mit den seitlichen Versteifungselementen 23 mit dem Schleppfahrzeug 2 verbunden. Die Deichsel 11 und auch die Abstützstebe 16 sind als teleskopartige Schieberohre ausgebildet, die durch Steckbolzen arretierbar sind.
Die Abstützstrebe 16 kann auch durch einen Hydraulikzylinder gebildet sein, der durch ein Steuergerät feststellbar oder in Schwimmstellung bringbar ist. Außerdem kann er vor und zurückgesteuert werden. Außer einer Verriegelung mit Hilfe von Steckbolzen kann auch ein hydraulischer Feststellpuffer für die Feststelleinrichtung 21 vorgesehen sein.
Eine wiederum abgewandelte Ausführungsform einer Verbindung zwischen Schleppfahrzeug 2 und Anhänger 3 sieht vor, daß oberhalb der Deichsel mit Abstand zu dieser wenigstens ein Zugelement, vorzugsweise ein Seil oder dergleichen zur Bildung einer Zugverbindung zwischen Schleppfahrzeug und Anhänger vorgesehen ist. Die darunter mit Abstand liegende Deichsel bildet hierbei eine Stützverbindung, so daß auch bei dieser Ausbildung die beim Anheben einer Last auftretenden Kräfte auf das Schleppfahrzeug 2 übertragen werden können.
Die Deichsel kann bei diesem Ausführungsbeispiel in unterschiedlichen Höhen am Schleppfahrzeug 2 angekuppelt werden, wobei für die Arbeitsstellung eine Ankuppelstelle gewählt wird, in der die obere Zugverbindung straff ist. Für den Fahrbetrieb wird dann an einer tieferliegenden Stelle angekuppelt, so daß der Anhänger etwas nach vorne kippt und dabei die Zugverbindung lockert.

Der Anhänger 3 ist als Einachsanhänger mit zwei vorzugsweise in ihrer Breite verstellbaren Räderns 31 ausgebildet. In Fig. 8 und 9 ist noch angedeutet, daß die Lage der Räder 31 auch nach hinter verlagert werden kann. Außerdem ist erkennbar (Fig. 8), daß an der Rückseite des Anhängers 3 ein Stützrad 29 angeordnet ist, das mechanisch oder durch eine Hydraulikzylinder 30 in der Höhe verstellbar ist. Das Stützrad kann auch als Walze ausgebildet sein.

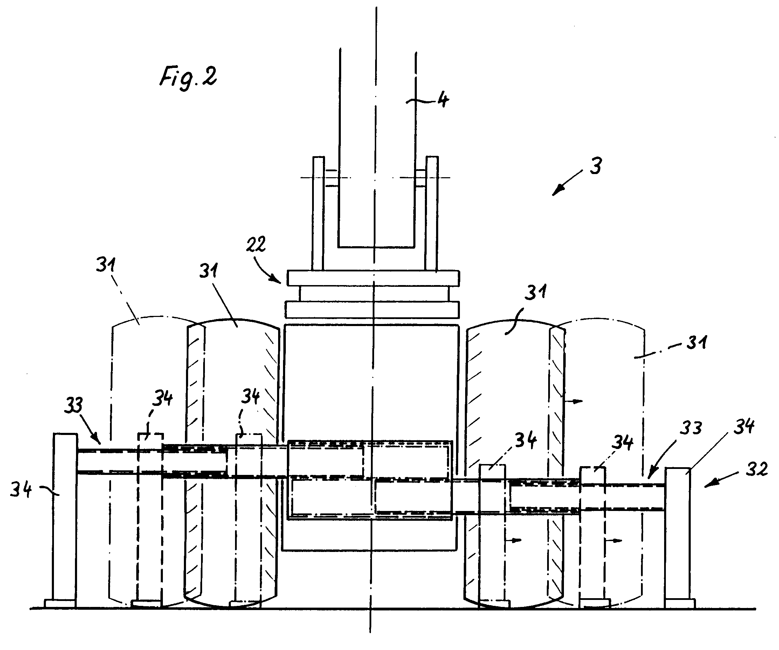

Fig. 7 zeigt in einer Rückseitenansicht den Anhänger 3 mit Stützrad 29. Gut ist hier auch zu erkennen, daß die Räder 31 von ihrer Schmalspur-Arbeitsstellung in eine strichpunktiert angedeutete Fahrstellung mit verbreiterter Spur bringbar sind. Um nun in Schmalspurstellung des Anhängers trotzdem auch eine für hohe Lasten ausreichende seitliche Abstützung zu erreichen, ist eine Abstützung 32 mit seitlich ausfahrbaren Stützarmen 33 vorgesehen. Die Stützarme 33 sind teleskopartig aus mehreren Gliedern bestehend ausgebildet, wobei die äußere Glieder Stützstempel 34 tragen.
Die Stützarme 33 sind über Hydraulikzylinder ein- und ausfahrbar. Fig. 2 zeigt die Abstützung 32, in ausgefahrener Lage, einer Zwischenstellung sowie der inneren Fahrstellung. Die Stützstempel 34 lassen sich zum Einfahren entsprechend verkürzen und sind als Teleskope ausgebildet (vgl. auch Fig.1 u. 7).
Um die Seitenabstützung noch zu verbessern, können die Stützstempel 34 oder die äußeren Glieder der Stützarme 33 mit Gewichten versehen sein, wobei hier zweckmäßigerweise zur Gewichtserhöhung Vollmaterial in diesen Bereichen verwendet werden kann.

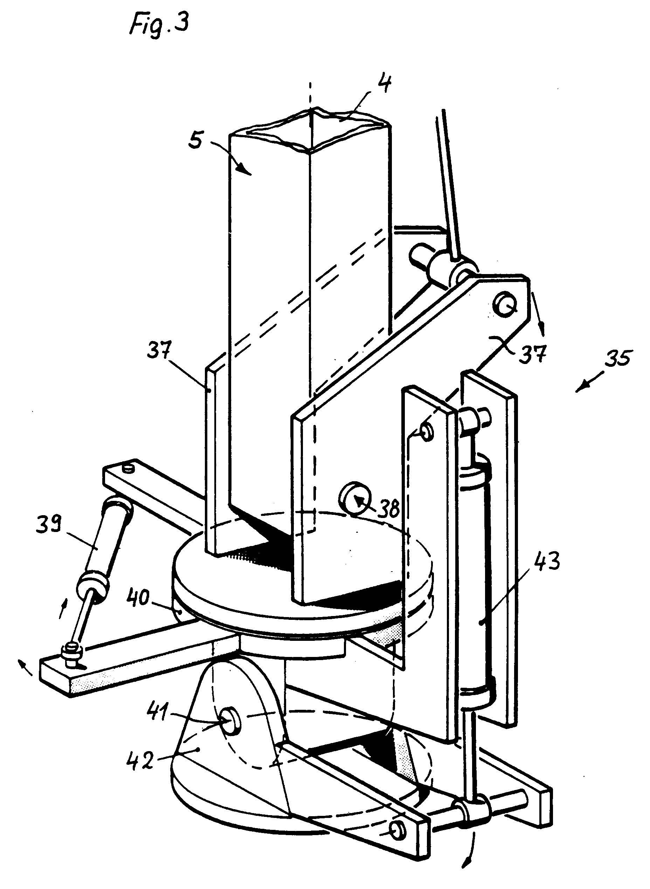

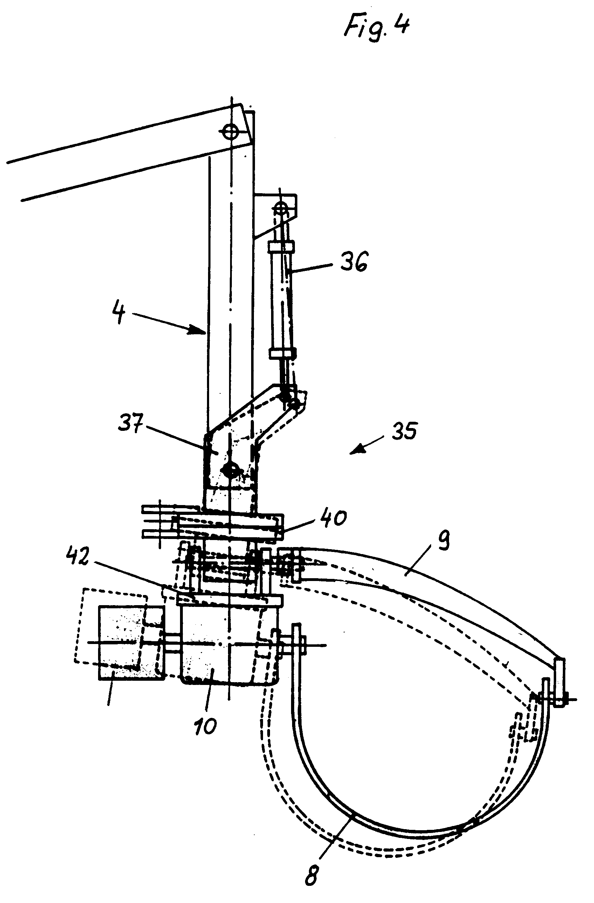

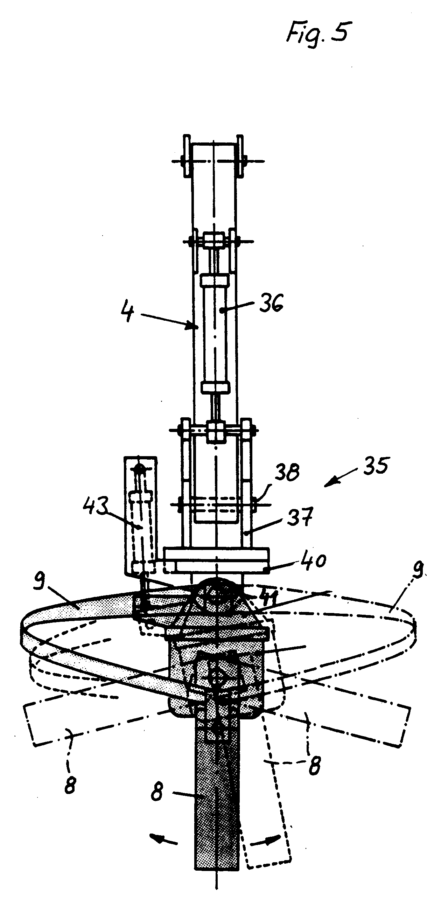

Zwischen dem Arbeitsgerät 6 und dem Ausleger-Gelenkarm 4 ist eine Doppelgelenk-Drehverbindung 35 vorgesehen. Diese ist detailliert in den Fig. 3 bis 5 erkennbar. Mit Hilfe eines Hydraulikzylinders 36 (Fig. 4 und 5) ist ein Schwenkteil 37 über eine Lagerstelle 38 schwenkbar mit dem freien Ende 5 des Ausleger-Gelenkarmes 4 verbunden. Ein weiterer Hydraulikzylinder 39 betätigt ein Drehteil 40, das um eine Achse in Verlängerung des Ausleger-Gelenkarmendes gegenüber dem Schwenkteil 37 verdrehbar ist. An dem Drehteil 40 befindet sich ein Schwenkgelenk 41, an dem ein Schwenkteil 42 schwenkbar angeschlossen ist. Zur Betätigung dieses Schwenkteiles 42 dient ein Hydraulikzylinder 43. Bei der Drehverbindung zwischen den Teilen 37 und 40 könnte auch als Antrieb ein auf einen Drehkranz arbeitender Hydraulikmotor oder dergleichen Antrieb vorgesehen sein, um die bei Verwendung eines Hydraulikzylinders 39 begrenzte Drehbewegung auf eine Drehung von 360° zu erweitern.
Durch die Doppelgelenk-Drehverbindung 35 kann mit dem Arbeitsgerät 6, insbesondere dem Ballenschneider 7 praktisch in alle Richtung gearbeitet werden, so daß wahlweise Pflanzen aus nebeneinanderliegenden Pflanzreihen beidseitig des Fahrzeuges bearbeitet werden können. Besonders vorteilhaft ist bei Einsatz eines Ballenschneiders 7 auch noch, daß ein unterschnittener und von dem in Untenstellung befindlichen Unterschneidemesser 8 unterstützter Ballen seitlich auf ein Ballentuch abgelegt werden kann, indem dazu der Hydraulikzylinder 36 betätigt wird und bei entsprechender Drehlage des Ballenschneiders ein seitliches Abkippen erfolgt. Der Ballenschneider befindet sich dabei mit seinem Unterschneidemesser in einer um 90° zu der in Fig. 1 gezeigten Stellung um eine vertikale Achse gedrehten Lage.
Das Unterschneidemesser kann in unterschiedliche Neigungswinkel eingestellt werden, was beim Ausheben der Pflanze von großem Vorteil ist.
Die Fig. 4 und 5 lassen gut auch die Bewegbarkeit des Ballenschneiders erkennen.
In den Figuren 1 und 8 ist am vorderen Ende des Gelenkarmes 4 ein Hubzylinder erkennbar, der für die Betätigung eines Baggerlöffels vorgesehen ist und bei dem Ballenschneider außer Funktion ist.

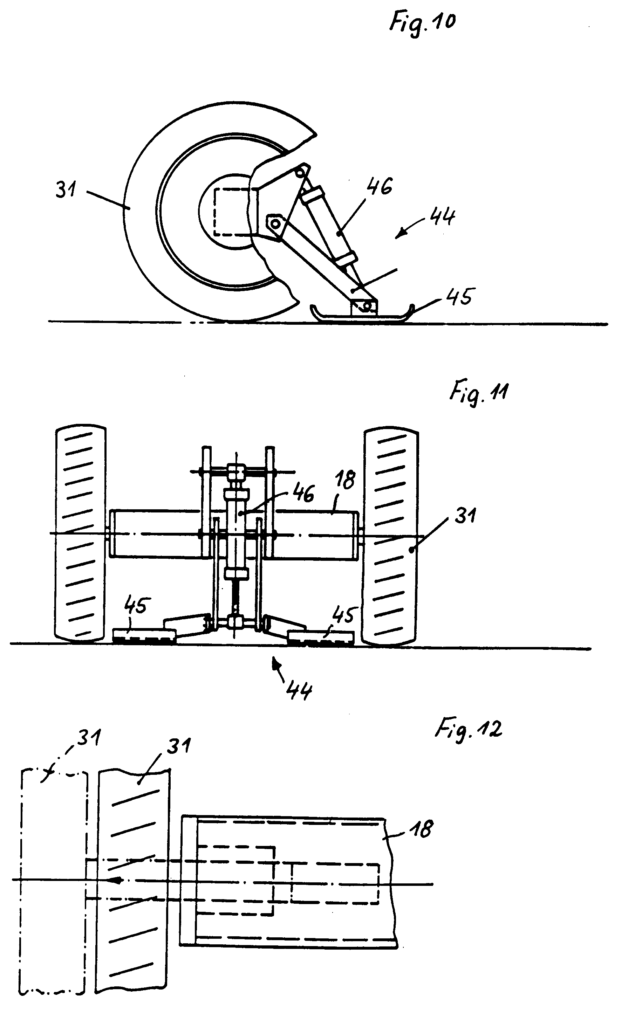

In den Fig. 10 und 11 ist noch eine Schlittenkufenvorrichtung 44 erkennbar, mittels der eine Zusatzabstützung und eine Entlastung der Räder 31 möglich ist. Die Schlittenkufen 45 sind mittels eines Hydraulikzylinders 46 beaufschlagbar. Die Schlittenkufen können in der Breite verstellbar sein.
Die Schlittenkufenvorrichtung dient insbesondere für den Transport des Anhängers innerhalb der Pflanzreihen bei schwierigen Bodenverhältnissen oder bei sehr engen Pflanzreihenabständen nach einer Demontage der Stützräder und zur Entlastung der Hinterachse des Schmalspurschleppers.

Zum Aufnehmen eines unterschnittenen Ballens kann es noch vorteilhaft sein, wenn an dem Messerbügel-Halter 9 ein beispielsweise spatenförmiges, nach unten weisendes Stützelement vorgesehen ist. Bedarfsweise könnte dieses Stützelement mit einem Hubantrieb verbunden sein, der ein Ausfahren des Stützelementes nach unten ermöglicht. Bei unterschnittenem Pflanzballen wird durch ein solches Stützelement der Ballen auf der einen Seite abgestützt, während er von der anderen Seite und von unten her von dem Unterschneidemesser 8 gehalten ist. Der Ballen ist so beim Aufnehmen und Verschwenken für ein Verladen sicherer gehalten.

## Patentansprüche

1. Maschine insbesondere zum Einsatz in Baumschulen, Gärten oder dergleichen mit einem Schleppfahrzeug und einem Anhänger, auf dem sich ein Ausleger-Gelenkarm mit einem an diesem anbringbaren Arbeitsgerät befindet, **dadurch gekennzeichnet,** daß das Schleppfahrzeug (2) ein Schmalspurschlepper oder dergleichen ist, daß der Anhänger (3) ein Schmalspur-Anhänger ist und in Arbeitsstellung zumindest in Belastungsrichtung starr und im wesentlichen biegesteif mit dem Schleppfahrzeug (2) kuppelbar ist und daß sich am Anhänger (3) eine Abstützung (32) mit seitlich ausfahrbaren Stützarmen (33) befindet.

2. Maschine nach Anspruch 1, dadurch gekennzeichnet, daß die mit dem Anhänger (3) verbundene Abstützung zwischen dem Schleppfahrzeug (2) und dem Anhänger (3) vorgesehen ist.

3. Maschine nach Anspruch 1 oder 2, dadurch gekennzeichnet, daß der Anhänger (3) ein Einachsanhänger ist.

4. Maschine nah einem der Ansprüche 1 bis 3, dadurch gekennzeichnet, daß das Arbeitsgerät (6) vorzugsweise ein Ballenschneider (7) mit Unterschneide- und Aushebmesser (8) sowie Vibrations- und Schwenkgetriebe (10), gegebenenfalls ein Baggerlöffel, ein Greifer, ein Kran, ein Hubsteiger oder dergleichen ist.

5. Maschine nach einem der Ansprüche 1 bis 4, dadurch gekennzeichnet, daß die Spurbreite des Anhängers (3) verstellbar, insbesondere verbreiterbar ist und daß dazu vorzugsweise teleskopartige, hydraulisch betätigbare Achsteile vorgesehen sind.

6. Maschine nach einem der Ansprüche 1 bis 5, dadurch gekennzeichnet, daß zwischen dem Ausleger-Gelenkarm (4) und dem daran angebrachten Arbeitsgerät (6) insbesondere einem Ballenschneider (7) eine Doppelgelenk-Drehverbindung (35) vorgesehen ist zur Ausführung von Drehbewegungen und Kippbewegungen des Arbeitsgerätes.

7. Maschine nach einem der Ansprüche 1 bis 6, dadurch gekennzeichnet, daß als Verbindung zwischen Schlepper (2) und Anhänger (3) eine Deichsel (11) und zusätzlich höhenversetzt zu der Deichsel wenigstens eine Abstützstrebe (16) oder dergleichen vorgesehen ist.

8. Maschine nach Anspruch 7, dadurch gekennzeichnet, daß die Abstützstrebe (16) parallel zu der Deichsel (11) in einer zur Deichsel vertikalen Ebene angeordnet ist und daß sie vorzugsweise teleskopartig verschiebbar sowie mittels einer Feststelleinrichtung (21) in ihrer Länge feststellbar ausgebildet ist.

9. Maschine nach Anspruch 8, dadurch gekennzeichnet, daß die Feststelleinrichtung (21) der Abstützstrebe (16) hydraulisch betätigbar ist.

10. Maschine nach einem der Ansprüche 1 bis 9, dadurch gekennzeichnet, daß als Abstützstrebe wenigstens ein feststellbarer, vorzugsweise hydraulischer Positionierzylinder vorgesehen ist.

11. Maschine nach einem der vorstehenden Ansprüche, dadurch gekennzeichnet, daß oberhalb der Deichsel (11) mit Abstand zu dieser wenigstens ein Zugelement, vorzugsweise ein Seil zur Bildung einer Zugverbindung zwischen Schleppfahrzeug (2) und Anhänger (3) vorgesehen ist, daß die Deichsel (11) eine Stützverbindung bildet und daß das schleppfahrzeugseitige Ende der Deichsel (11) höhenverstellbar an dem Schleppfahrzeug ankuppelbar ist.

12. Maschine nach einem der Ansprüche 1 bis 11, dadurch gekennzeichnet, daß die Abstützung (32) mit den seitlich ausfahrbaren Stützarmen (33) hydraulisch betätigbar ist und daß die Betätigungshydraulik vorzugsweise mit der der Feststelleinrichtung (21) der Abstützstrebe (16) bzw. dem dafür vorgesehenen Positionier-Hydraulikzylinder gekoppelt ist.

13. Maschine nach einem der Ansprüche 1 bis 12, dadurch gekennzeichnet, daß an den äußeren Enden der Stützarme (33) der Abstützung (32) Gewicht vorgesehen sind und daß vorzugsweise an den äußeren Stützarmenden befindliche Stützstempel (34) und/oder die äußeren Glieder der vorzugsweise hydraulisch teleskopierbaren Stützarme (33) zumindest bereichsweise aus Vollmaterial bestehen oder mit Gewichten gefüllt sind.

14. Maschine nach Anspruch 13, dadurch gekennzeichnet, daß die Stützstempel (34) hydraulisch höhenverstellbar sind.

15. Maschine nach einem der Ansprüche 1 bis 14, dadurch gekennzeichnet, daß das Anhänger-seitige Ende der Deichsel (11) über ein Schwenkgelenk (12) mit dem Anhänger (3) verbunden ist und daß ein Steuerantrieb zum Lenken des Anhängers um dieses Schwenkgelenk, vorzugsweise ein einerseits am Anhänger und andererseits an der Deichsel (11) angegreifender Hydraulik-Lenkzylinder (15) vorgesehen ist.

16. Maschine nach einem der Ansprüche 1 bis 15, dadurch gekennzeichnet, daß bei Verwendung eines Ballenschneiders (7) als Arbeitsgerät (6) mit einem bügelartigen Messer (8) an dem Messerbügel-Halter (9) wenigstens ein nach unten weisendes Stützelement vorgesehen ist.

17. Maschine nach Anspruch 16, dadurch gekennzeichnet, daß das Stützelement durch wenigstens eine vorzugsweise spatenförmige Fläche, einen Dorn oder dergleichen gebildet ist und daß diese(r) entweder starr am Messerbügel-Halter (9) angebracht oder über Hydraulikzylinder ausfahrbar ist.

18. Maschine nach einem der Ansprüche 1 bis 17, dadurch gekennzeichnet, daß der Messerbügel-Halter (9) derart zentral gelagert ist, daß er um etwa 250° schwenkbar und durch eine Feststellvorrichtung, zum Beispiel eine Zahnscheibe feststellbar ist.

19. Maschine nach einem der Ansprüche 1 bis 18, dadurch gekennzeichnet, daß am Rahmen des Anhängers (3) eine Schlittenkufenvorrichtung (44) angeordnet ist, insbesondere um die Stützräder des Anhängers (3) oder bei demontierten Stützrädern die Hinterachse des Schmalspurschleppers zu entlasten.
